Europäisches Patentamt

European Patent Office

Office européen des brevets

(19)

(11) Veröffentlichungsnummer: **0 111 807**

**A1**

(12) **EUROPÄISCHE PATENTANMELDUNG**

(21) Anmeldenummer: 83112194.2

(22) Anmeldetag: 05.12.83

(51) Int. Cl.³: **B 01 J 2/28**
B 01 J 2/12, B 01 J 2/10
B 01 J 2/14, B 01 J 2/16

(30) Priorität: 16.12.82 DE 3246493

(43) Veröffentlichungstag der Anmeldung:
27.06.84 Patentblatt 84/26

(84) Benannte Vertragsstaaten:
AT BE CH DE FR GB IT LI NL

(71) Anmelder: BAYER AG
Konzernverwaltung RP Patentabteilung
D-5090 Leverkusen 1 Bayerwerk(DE)

(72) Erfinder: Neumaier, Hermann, Dr.
Kurlandweg 33
D-5653 Leichlingen 1(DE)

(72) Erfinder: Hausmann, Heinz, Dr.
Dierath 5
D-5653 Leichlingen 1(DE)

(54) Verfahren zur Herstellung von wasserdispergierbaren Granulaten.

(57) Neues Verfahren zur schonenden Herstellung von wasserdispergierbaren Granulaten. Das Verfahren besteht darin, daß man das zu granulierende pulverförmige Material einer rotierenden oder rollenden Bewegung unterwirft und mit Wasserdampf, der eine Temperatur zwischen 25°C und 100°C aufweist und gegebenenfalls Formulierhilfsmittel enthält, oder mit dampfförmigen Formulierhilfsmitteln besprüht und das so erhaltene Produkt trocknet.

Auch die nach dem erfindungsgemäßen Verfahren herstellbaren Granulate sind neu.

EP 0 111 807 A1

BAYER AKTIENGESELLSCHAFT　　5090 Leverkusen, Bayerwerk

Zentralbereich
Patente, Marken und Lizenzen　Dü-by-c
　　　　　　　　　　　　　　　v

Verfahren zur Herstellung von wasserdispergierbaren
Granulaten

---

Die vorliegende Erfindung betrifft ein neues Verfahren
zur schonenden Herstellung von wasserdispergierbaren
Granulaten sowie die nach diesem Verfahren erhaltenen
Granulate.

Es ist bereits bekannt, daß wasserdispergierbare Granulate durch mischende und rollende Bewegung des zu granulierenden Materials in entsprechenden Apparaturen unter gleichzeitiger Zugabe geringer Mengen an Flüssigkei (Wasser bzw. Wasser und organische Lösungsmittel) gebildet werden (vgl. H. B. Ries "Aufbaugranulierung in Aufbereitungstechnik 11, (1971) Seiten 675 ff).

Weiterhin ist es schon bekannt, wasserdispergierbare Granulate herzustellen, indem man dem zu granulierenden Material in einer Granuliertrommel soviel Granulierflüssigkeit zugibt, daß die Gleichgewichtsfeuchte dieses Materials überschritten wird, und man anschließend das erhaltene Produkt wieder bis auf oder unter die Gleich-

Le A 21 433

gewichtsfeuchte heruntertrocknet (vgl. DE-OS 27 23 221).

Außerdem wurde bereits die Herstellung von wasserdispergierbaren Granulaten nach dem Wirbelschichtverfahren beschrieben (vgl. US-PS 3 920 442). Hierbei wird das fein
zerteilte Material mit einer wäßrigen Lösung besprüht,
die ein Bindemittel enthält.

Nachteilig an diesen bekannten Verfahren ist, daß im allgemeinen ein relativ hoher maschineller Aufwand erforderlich ist, und die Verfahren schwierig zu steuern sind.
Außerdem ist in vielen Fällen im Anschluß an die eigentliche Granulierung ein Trocknungsprozeß notwendig, um
überschüssiges Wasser und organische Lösungsmittel zu
entfernen, was zu einer unerwünschten Umweltbelastung
führt. Schließlich ist beim Aufsprühen von Wasser auf
das zu granulierende Material die Tropfengröße derart
hoch, daß beim Granulierprozeß lokale Überfeuchtungen
auftreten, welche störende Verklumpungen bewirken. Es
bilden sich dabei sehr große, in der Korngröße nicht
erwünschte Agglomerate, wodurch die Ausbeute an Material
im gewünschten Korngrößenbereich dementsprechend erniedrigt wird.

Es wurde nun gefunden, daß man wasserdispergierbare
bzw. wasserlösliche Granulate erhält, wenn man das zu
granulierende pulverförmige Material einer rotierenden
oder rollenden Bewegung unterwirft und mit Wasserdampf,
der eine Temperatur zwischen 25°C und 100°C aufweist,
und gegebenenfalls Formulierhilfsmittel enthält, oder
mit dampfförmigen Formulierhilfsmitteln besprüht und das
so erhaltene Produkt trocknet.

Le A 21 433

Gegenstand der Erfindung sind ferner wasserdispergierbare bzw. wasserlösliche Granulate, die nach dem erfindungsgemäßen Verfahren hergestellt werden.

Es ist als ausgesprochen überraschend zu bezeichnen, daß nach dem erfindungsgemäßen Verfahren für die Praxis geeignete wasserdispergierbare bzw. wasserlösliche Granulate erhalten werden, denn aufgrund des bekannten Standes der Technik mußte erwartet werden, daß nur bei Zugabe einer ausreichenden Flüssigkeitsmenge eine Granulierung stattfindet, nicht aber bei Verwendung von Wasserdampf.

Das erfindungsgemäße Verfahren weist eine Reihe von Vorteilen auf. So kann es in üblichen Granulierapparaturen mit geringem Aufwand personenneutral durchgeführt werden. Außerdem kann es wegen des besonders schonenden Ablaufes auch für die Granulierung temperaturempfindlicher und hydrolytisch leicht versetzbarer Substanzen eingesetzt werden. Günstig ist auch, daß keine organischen Lösungsmittel erforderlich sind und daher eine Umweltbelastung durch Abdampfen derartiger Solventien entfällt. Von besonderem Vorteil ist es, daß bei dem erfindungsgemäßen Verfahren nur feinste Nebeltröpfchen das zu granulierende Material berühren, so daß eine lokale Wasseransammlung und damit eine Verklumpung nicht eintreten kann. Da schließlich die benötigte Dampfmenge gering ist und vorsichtig dosiert wird, ist der Endpunkt der Agglomeration einfach zu erkennen, und es kann schwerlich überagglomeriert werden.

Le A 21 433

Die erfindungsgemäßen Granulate besitzen eine hohe mechanische Festigkeit und sind deshalb auch beim Transport gegen Abrieb recht stabil. Sie sind staubarm, weisen eine weitgehend einheitliche Korngröße in einem Bereich kleiner Korngrößen auf und zeichnen sich gegenüber Granulaten, die auf herkömmlichem Wege hergestellt werden, durch eine verbesserte Dispergierbarkeit bzw. Löslichkeit in Wasser aus.

Zur Durchführung des erfindungsgemäßen Verfahrens kommen alle für die Granulierung von Festsubstanzen geeigneten Apparaturen in Betracht. Beispielsweise genannt seien Granuliermischer, Granulierteller, Granuliertrommeln, Siebgranulatoren, Schugi-Agglomerator und Wirbelschichtgranulator. Besonders bevorzugt ist im vorliegenden Fall die Granulierung mit Hilfe eines Granuliertellers.

Diese zur Granulierung benötigten Geräte sind bekannt.

Das bei dem erfindungsgemäßen Verfahren zu granulierende pulverförmige Material kann aus einer oder mehreren wasserlöslichen oder wasserunlöslichen aktiven Komponenten gegebenenfalls im Gemisch mit Zusatzstoffen bestehen. Es können sowohl aktive Komponenten eingesetzt werden, die bei Raumtemperatur fest sind als auch solche, die bei Raumtemperatur flüssig sind. Voraussetzung für die Verwendung flüssiger aktiver Komponenten ist lediglich, daß sie vor der Granulierung auf feste Trägerstoffe aufgezogen werden.

Le A 21 433

Als aktive Komponenten kommen agrochemische Wirkstoffe, Wirkstoffe zur Bekämpfung von Schädlingen im Haushalts- und Hygienebereich, pharmakologisch wirksame Stoffe, Nährstoffe, Farbstoffe und organische oder anorganische Chemikalien in Betracht.

Unter agrochemischen Stoffen sind im vorliegenden Fall üblicherweise im Pflanzenschutz verwendbare Wirkstoffe zu verstehen. Hierzu gehören vorzugsweise Insektizide, Akarizide, Nematizide, Fungizide, Herbizide, Wachstumsregulatoren und Düngemittel. Als Beispiele für derartige Wirkstoffe seien im einzelnen genannt:

O,O-Diethyl-O-(4-nitro-phenyl)-thiono-phosphorsäureester
O,O-Dimethyl-O-(4-nitro-phenyl)-thiono-phosphorsäure-ester
O-(Ethyl-O-(4-methylthio)-phenyl)-S-propyl-dithiophosphat
(O,O-Diethylthionophosphoryl)-$\alpha$-oximino-phenylessig-säurenitril
2-Isopropoxy-phenyl-N-methylcarbamat
3-Methylthio-4-amino-6-tert.-butyl-1,2,4-triazin-5-on
3-Methylthio-4-isobutylidenamino-6-tert.-butyl-1,2,4-triazin-5-on
2-Chlor-4-ethylamino-6-isopropylamino-1,3,5-triazin
2,3-Dihydro-2,2-dimethyl-7-benzofuranyl-methyl-carbamat
3,5-Dimethyl-4-methylthiophenyl-N-methyl-carbamat
O,O-Diethyl-O-(3-chlor-4-methyl-7-cumarinyl)-thio-phosphat

Le A 21 433

$\gamma$-Hexachlorcyclohexan

6,7,8,9,10,10-Hexachlor-1,5,5A,6,9,9A-hexahydro-6,9-methan-2,4,3-benzo-dioxathiepin-3-oxid

1,4,5,6,7,8,8-Heptachlor-4,7-endo-methylen-3A,4,7,7A-tetrahydroinden

2-(2-Furyl)-benzimidazol

5-Amino-1-bis-(dimethylamido)-phosphoryl-3-phenyl-1,2,4-triazol

4-Hydroxy-3-(1,2,3,4-tetrahydro-1-naphthyl)-cumarin

S-[1,2-Bis-(ethoxycarbonyl)-ethyl]-O,O-dimethyl-dithio-phosphorsäureester

O,O-Dimethyl-O-(4-methylmercapto-3-methyl-phenyl)-thiono-phosphorsäureester

O-Ethyl-O-(2-isopropyloxycarbonyl-phenyl)-N-isopropyl-thionophosphorsäureesteramid

1-(4-Chlorphenoxy)-3,3-dimethyl-1-(1,2,4-triazol-1-yl)-2-butanon

(S)-$\alpha$-Cyano-3-phenoxybenzyl(1R)-cis-3-(2,2-dibromvinyl)-2,2-dimethylcyclopropancarboxylat

Unter Wirkstoffen zur Bekämpfung von Schädlingen im Haushalts- und Hygiene-Bereich sind im vorliegenden Fall üb-licherweise für derartige Zwecke einsetzbare Stoffe zu verstehen. Als Beispiele seien genannt:

2-Isopropoxy-phenyl-N-methylcarbamat

O,O-Diethyl-O-(4-nitro-phenyl)-thionophosphorsäureester

O,O-Dimethyl-O-(4-nitro-phenyl)-thionophosphorsäureester

S-[1,2-Bis-(ethoxycarbonyl)-ethyl]-O,O-dimethyl-dithio-phosphorsäureester

Le A 21 433

O,O-Dimethyl-O-(3-methyl-4-nitro-phenyl)-thionophosphor-säureester

O,O-Dimethyl-O-(4-methylmercapto-3-methyl-phenyl)-thionophosphorsäureester

(Cyclohex-1-en-1,2-dicarboximidomethyl)-2,2-dimethyl-3-(2-methylpropenyl)-cyclopropancarboxylat

Unter pharmakologisch wirksamen Stoffen sind im vorliegenden Fall vorzugsweise im veterinärmedizinischen Bereich einsetzbare zu verstehen. Als Beispiel für derartige Wirkstoffe sei genannt:

2,2-Dimethyl-3-/$\bar{ß}$-(p-chlorphenyl)-ß-chlorvinyl/-cyclopropancarbonsäure-$\alpha$-cyano-3-phenoxy-4-fluor-benzylester

Als Nährstoffe können sowohl Stoffe für die menschliche als auch Stoffe für die tierische Nahrung eingesetzt werden. Als Beispiele seien genannt: Zitronensäure, Vitamine, Kaffeepulver, Teepulver und Kakaopulver.

Unter Farbstoffen sind im vorliegenden Fall zur Herstellung von Farbstoffdispersionen bzw. Farbstofflösungen geeignete Stoffe zu verstehen, die als Färbemittel und/oder Anstrichstoffe Verwendung finden.

Als organische bzw. anorganische Chemikalien kommen solche Stoffe in Frage, die vorzugsweise in Form von wäßrigen Dispersionen für synthetische Zwecke verwendet werden.

<u>Le A 21 433</u>

Als Zusatzstoffe, die in dem nach dem erfindungsgemäßen Verfahren zu granulierenden pulverförmigen Material enthalten sein können, kommen Netz- und/oder Dispergiermittel, Bindemittel, Stellmittel, Konservierungsmittel, Farbstoffe sowie inerte Füll- und Trägerstoffe in Frage.

Vorzugsweise verwendbare Netz- bzw. Dispergiermittel sind hierbei oberflächenaktive Stoffe anionischer, kationischer oder nichtionischer Natur wie sie zum Beispiel beschrieben werden in "Tenside-Textilhilfsmittel-Waschrohstoffe", Band 1, Seiten 571-835, 837-917 und 963-1041 (1964) sowie in "Grenzflächenaktive Ethylenoxid-Addukte", Seiten 42-95 (1976). Speziell genant seien Ligninsulfonat, Methylcellulose, Polyoxyethylen-Fettsäureester, Polyoxyethylen-Fettalkoholether, z.B. Alkylarylpolyglykolether, Alkylsulfonate und Eiweißhydrolysate.

Als Bindemittel können bei der Durchführung des erfindungsgemäßen Verfahrens alle zur Herstellung von wasserdispergierbaren bzw. wasserlöslichen Granulaten üblichen Bindemittel (Kleber) eingesetzt werden. Hierzu gehören vorzugsweise Lösungen, Emulsionen oder Latices von natürlichen oder synthetischen Stoffen, wie Methylcellulose, Dextrin, Zucker, Stärke, Alginate, Glykole, Polyvinylpyrrolidon, Ligninsulfonat, Gummiarabicum, Polyvinylalkohol und Polyvinylacetat, in Wasser oder niedrig siedenden organischen Solventien, wie Methanol, Ethanol, Butanol und Methylenchlorid.

Le A 21 433

Als Stellmittel seien Natriumsulfat und Kochsalz genannt. Beispiele für Konservierungsmittel sind 2-Hydroxybiphenyl und Sorbinsäure. Als Farbstoffe, die als Zusatzstoffe in Betracht kommen, seien anorganische Pigmente, wie Eisenoxid, Titandioxid und Ferrocyanblau, und organische Farbstoffe, wie Alizarin-, Azo- und Metallphthalocyaninfarbstoffe genannt. Als inerte Füll- bzw. Trägerstoffe kommen feinkörnige anorganische und organische Feststoffe in Frage, wie natürliche Gesteinsmehle, z.B. Kaoline, Tonerden, Talkum, Kreide, Quarz, Altapulgit, Montmorillonit oder Diatomeenerde, ferner synthetische Gesteinsmehle, wie hochdisperse Kieselsäure, Aluminiumoxid und Silikate und außerdem Mehle natürlicher organischer Stoffe, wie Holzmehl, Korkmehl und Tabakstaub.

Unter Wasserdampf sind im Falle des erfindungsgemäßen Verfahrens sowohl normaler Wasserdampf als auch Feuchtdampf zu verstehen. Die Temperatur des Dampfes kann innerhalb eines größeren Bereiches variiert werden. Sie liegt im allgemeinen zwischen 25°C und 100°C, vorzugsweise zwischen 40°C und 90°C. Der Durchmesser der Dampftröpfchen liegt unter 100 µ.

Bei dem erfindungsgemäßen Verfahren wird das primär erhaltene Granulat, das nach der Behandlung des pulverförmigen Materials mit Dampf beziehungsweise Dampf im Gemisch mit Formulierhilfsmitteln oder mit dampfförmigen Formulierhilfsmitteln anfällt, nach üblichen Methoden getrocknet. Besonders bevorzugt ist eine schnelle Trocknung bei erhöhten Temperaturen. Der Trocknungsprozeß kann je nach dem benutzten Granuliergerät entweder in der zur

Le A 21 433

Herstellung des Granulats verwendeten Apparatur oder in einem gesonderten Trockner vorgenommen werden.

Das erfindungsgemäße Verfahren wird im allgemeinen bei Normaldruck durchgeführt. Es ist jedoch auch möglich, unter erhöhtem oder vermindertem Druck zu arbeiten.

Im einzelnen verfährt man bei der Durchführung des erfindungsgemäßen Verfahrens in der Weise, daß man das feinteilige pulvrige Material, das man gegebenenfalls durch Vermischen der Komponenten und gegebenenfalls anschließendes Mahlen herstellt, in das Granuliergerät gibt, dort durch Einschalten des Gerätes in rollende bzw. rotierende Bewegung bringt und dann über eine entsprechende Dosiervorrichtung Wasserdampf oder feuchten Wasserdampf beziehungsweise Dampf im Gemisch mit Formulierhilfsmitteln oder dampfförmige Formulierhilfsmittel der jeweils gewünschten Temperatur aufsprüht. Die Dampfmenge und die Temperatur des Dampfes lassen sich in Abhängigkeit von dem jeweiligen Material variieren. Die Dampfzufuhr erfolgt mit einer solchen Geschwindigkeit, daß der Granulierprozeß nicht zu schnell abläuft und der Endpunkt der Agglomeration visuell ermittelt werden kann. Man führt solange Dampf zu, bis das Granulat die gewünschte Korngröße erreicht hat. Im allgemeinen liegen die Korngrößen zwischen 0,2 und 2 mm. Das auf diese Weise hergestellte Granulat wird danach getrocknet.

Bei dem erfindungsgemäßen Verfahren erhält man ein lockeres, rieselfähiges und staubarmes Granulat mit weitgehend

Le A 21 433

einheitlicher Korngröße in einem Bereich kleiner Korngrößen. Gegenüber herkömmlich hergestellten Granulaten
zeichnen sich die erfindungsgemäßen Granulate durch eine
verbesserte Dispergierbarkeit bzw. Löslichkeit in Wasser
aus.

Die erfindungsgemäßen Granulate lassen sich je nach den
enthaltenen aktiven Komponenten für verschiedenste Zwecke
einsetzen. Diejenigen Granulate, die agrochemische Wirkstoffe als aktive Komponenten enthalten, lassen sich nach
üblichen Methoden im Pflanzenschutz verwenden. Beispielsweise werden derartige Granulate in Wasser dispergiert
oder gelöst. Die dabei entstehenden Dispersionen bzw.
Lösungen lassen sich gegebenenfalls nach vorherigem
Verdünnen nach üblichen Methoden auf die Pflanzen und/
oder deren Lebensraum ausbringen. Sind in den erfindungsgemäßen Granulaten keine agrochemischen Wirkstoffe,
sondern andere aktive Komponenten enthalten, so erfolgt die Anwendung nach den auf dem jeweiligen Gebiet der Technik üblichen Methoden.

Le A 21 433

## Patentansprüche

1. Verfahren zur Herstellung von wasserdispergierbaren bzw. wasserlöslichen Granulaten, dadurch gekennzeichnet, daß man das zu granulierende pulverförmige Material einer rotierenden oder rollenden Bewegung unterwirft und mit Wasserdampf, der eine Temperatur zwischen 25°C und 100°C aufweist und gegebenenfalls Formulierhilfsmittel enthält, oder mit dampfförmigen Formulierhilfsmitteln besprüht und das so erhaltene Produkt trocknet.

2. Verfahren gemäß Anspruch 1, dadurch gekennzeichnet, daß das zu granulierende Material aus einer oder mehreren wasserunlöslichen oder wasserlöslichen aktiven Komponente gegebenenfalls im Gemisch mit Zusatzstoffen besteht.

3. Verfahren gemäß Anspruch 2, dadurch gekennzeichnet, daß als aktive Komponenten agrochemische Wirkstoffe, Wirkstoffe zur Bekämpfung von Schädlingen im Haushalts- und Hygienebereich, pharmakologisch wirksame Stoffe, Nährstoffe, Farbstoffe und/oder anorganische bzw. organische Chemikalien eingesetzt werden.

4. Verfahren gemäß Anspruch 2, dadurch gekennzeichnet, daß als Zusatzstoffe Netz- bzw. Dispergiermittel, Bindemittel, Stellmittel, Konservierungsmittel, Farbstoffe und/oder inerte Füll- und Trägerstoffe eingesetzt werden.

Le A 21 433

5.    Verfahren gemäß Anspruch 2, dadurch gekennzeichnet, daß als aktive Komponenten einer oder mehrere agrochemische Wirkstoffe eingesetzt werden.

6.    Verfahren gemäß Anspruch 1, dadurch gekennzeichnet, daß man das zu granulierende Material mit Wasserdampf oder feuchtem Wasserdampf besprüht.

7.    Verfahren gemäß Anspruch 1, dadurch gekennzeichnet, daß man das zu granulierende Material mit einem Gemisch aus Wasserdampf und Formulierhilfsmitteln oder mit dampfförmigen Formulierhilfsmitteln besprüht.

8.    Verfahren gemäß Anspruch 1, dadurch gekennzeichnet, daß man zur Erzeugung der rotierenden oder rollenden Bewegung des zu granulierenden Materials einen Tellergranulator einsetzt.

9.    Wasserdispergierbare bzw. wasserlösliche Granulate, dadurch gekennzeichnet, daß man sie erhält, indem man das zu granulierende pulverförmige Material einer rotierenden oder rollenden Bewegung unterwirft und mit Wasserdampf, der eine Temperatur zwischen 25°C und 100°C aufweist und gegebenenfalls Formulierhilfsmittel enthält, oder mit dampfförmigen Formulierhilfsmitteln besprüht und das so erhaltene Produkt trocknet.

Le A 21 433

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-1 667 125 (KÖHLER, DR. HANS)<br>* Seite 3, Absatz 2 - Seite 12 * | 1-9 | B 01 J 2/28<br>B 01 J 2/12<br>B 01 J 2/10<br>B 01 J 2/14<br>B 01 J 2/16 |
| X | GB-A- 794 030 (FISONS LIMITED)<br><br>* Seite 1, Zeile 1 - Seite 2, Zeile 115; Abbildung 1 * | 1,2,3<br>5,9 | |
| X | DE-B-1 156 388<br>(KLÖCKNER-HUMBOLDT-DEUTZ A.G.)<br>* Spalte 1, Zeile 1 - Spalte 4, Zeile 7 * | 1,6,9 | |
| X | GB-A- 349 007 (W.K. HALL)<br><br>* Seite 2, Zeile 12 - Seite 4, Zeile 68 * | 1,2,3<br>5,6,9 | RECHERCHIERTE SACHGEBIETE (Int. Cl. 3) |
| X | DE-B-1 252 211 (DEUTSCHE HYPERPHOSPHAT GESELLSCHAFT)<br><br>* Spalte 1, Zeile 1 - Spalte 10, Zeile 13 * | 1,2,3<br>5,6,8<br>9 | B 01 J |

Der vorliegende Recherchenbericht wurde für alle Patentansprüche erstellt.

| Recherchenort | Abschlußdatum der Recherche | Prüfer |
|---|---|---|
| DEN HAAG | 17-02-1984 | PYFFEROEN K. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82